# EUROPEAN PATENT SPECIFICATION

(11) **EP 0 905 005 B1**
(45) Date of publication and mention of the grant of the patent: **21.11.2001**
(21) Application number: 97116572.5
(22) Date of filing: 24.09.1997
(51) Int. Cl.: B62D 5/083

(54) **Rack-pinion type power steering apparatus**
Servolenkung mit Zahnstange
Direction assistée à pignon et crémaillère

(43) Date of publication of application: 31.03.1999
(60) Divisional application: 00117411.9
(73) Proprietor: BOSCH BRAKING SYSTEMS Co., Ltd., Tokyo 150-0002 (JP)
(72) Inventor: Sonoda, Hirotetsu, c/o Matsuyama Plant J.K. Co Ltd, Higashimatsuyama-shi, Saitama-ken (JP); Fukushima, Tatsuya, c/o Matsuyama Plant J.K.Co Ltd, Higashimatsuyama-shi, Saitama-ken (JP)
(74) Representative: Maser, Jochen, Dipl.-Ing.

(56) References cited:
- EP-A- 0 059 657
- EP-A- 0 072 712
- US-A- 4 501 191

## Description

### Background of the Invention

The present invention relates to a rack-pinion type power steering apparatus and, more particularly, to the support structure of a pinion shaft integrally formed with a sleeve serving as the outer valve member of a rotary type channel selector valve (rotor valve).

A rack-pinion type power steering apparatus is advantageous in that it is lightweight, has a comparatively simple arrangement, is excellent in steering performance, and requires a small space when being incorporated in a vehicle, and is accordingly among those which are often employed as power steering. Although many apparatuses having carious structures are conventionally proposed as such a rack-pinion type power steering apparatus, they still have room for improvement in achieving downsizing and weight reduction of an automobile and making the apparatus compact.

For example the document US-A 4,501,191 discloses a rack-pinion type power steering apparatus comprising a cylindrical stub shaft which rotates in a steering body upon a steering operation, a torsion bar having one end fixed at one end of said stub shaft and extending through said stub shaft toward the other end of said stub shaft, a pinion shaft pivotally connected to the other end of said torsion bar, a rotor arranged to cover said torsion bar from said stub shaft along an extending direction of said torsion bar and a sleeve having one end integrally connected to said pinion shaft, extending from said pinion shaft along said stub shaft, and arranged around said rotor to constitute a rotary type channel selector valve between said rotor and said sleeve, wherein said steering body has a stepped hole whose inner diameter increases stepwise from one end to the other end of said steering body on a stub shaft side, and said pinion shaft, said torsion bar and said stub shaft are incorporated in said stepped hole, a plurality of portions in said stepped hole are pivotally supported and a set member is fixed to an opening end of said stepped hole, thereby obtaining an integrally assembled overall structure.

This document further discloses that the pinion shaft is pivotally supported in the stepped hole of the steering body by support portions, disposed at two axial portions and the support portion on the stub shaft side comprises a ball bearing whose outer ring is fixed by the set member. US-A-4501191 discloses an apparatus according to the preamble of claim 1.

The document EP-A 903 280 discloses also a rack-pinion type power steering apparatus which is prior art under Article 54(3) EPC.

The conventional ball bearings are used as the bearing members for supporting the constituent components in the steering body described above. These ball bearings require a radial space, thus posing a problem in downsizing. To solve this problem, the cylindrical end portion of an inner component which is formed with the inner ring of the ball bearing may be used. With this structure, however, the assembly operation of the ball bearing portion is cumbersome and complicated. In addition, it is difficult to insert balls between the inner and outer rings in a predetermined state. Some countermeasure must be taken for this.

### Summary of the Invention

The present invention has been made in view of the above situation, and has as its object to provide a rack-pinion type power steering apparatus capable of improving workability and assembly in consideration of the structure of an overall apparatus, assuring good concentricity of the respective constituent components, and making the apparatus structure simple and compact.

The present invention has also been made in view of the above situation, and has as is object to provide a rackpinion type power steering apparatus allowing a simple assembly operation and automatic assembly in constituting a ball bearing such that a cylindrical end portion formed at some component to be incorporated is given as an inner ring, and the inner ring is assembled with the outer ring and balls.

In order to achieve the above object, according to the present invention, there is provided a rack-pinion type power steering apparatus according to claim 1.

According to the present invention, the support por-tion at the end portion of the pinion shaft on the stub shaft side comprises a ball bearing. This ball bearing is constituted such that the end portion of the pinion shaft on the stub shaft side serves as the inner ring, the outer ring is fitted on the outer circumferential side of the inner ring while interposing the plurality of balls between the inner and outer rings. The means (e.g., the annular stepped portion) for preventing a shift in balls during assembly is formed at a portion near the end portion of the pinion shaft on the stub shaft side. In assembling the ball bearing portion integrally with the end portion of the pinion shaft on the stub shaft side, assembly can be improved, and particularly, automatic assembly can be achieved.

Since the pinion shaft is radially supported by the steering body through the radial support portions at the two end portions of the sleeve which pose the serious problem in the valve action is smooth, thereby obtaining a smooth steering feeling. In particular, even if a light load such as a bending force acts on the pinion shaft, no deformation occurs in the sleeve, and the valve action of the rotary type channel selector valve for obtaining a steering auxiliary force can be performed smoothly.

### Brief Description of the Drawings

Fig. 1 is a sectional view of an apparatus main body portion showing a rack-pinion type power steering apparatus according to an embodiment of the present invention; and
Fig. 2A is a sectional view showing a stepped hole serving as the incorporating space of a steering body in Fig. 1;
Fig. 2B is a sectional view taken along the line II - II in Fig. 2A;
Figs. 3A and 3B are sectional views showing the assembled states of a ball bearing in the apparatus shown in Fig. 1;
Figs. 4A and 4B are plan views showing the assembled states of the ball bearing in Figs. 3A and 3B;
Fig. 5 is a view showing a cage member interposed between the balls in the ball bearing; and
Fig. 6 is a view for explaining an affect of an annular stepped portion in Figs. 1 and 3.

### Description of the Preferred Embodiment

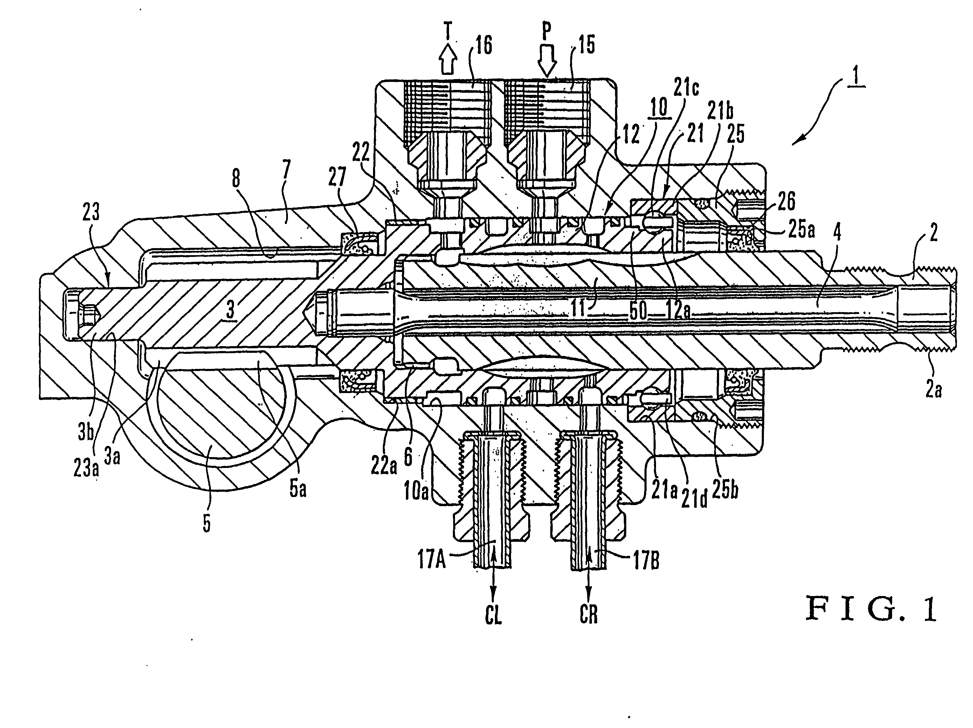

Fig. 1 shows a rack-pinion type power steering apparatus according to an embodiment of the present invention. In Fig. 1, reference numeral 1 denotes the power steering main body portion of the rack-pinion type power steering apparatus; 2, a cylindrical stub shaft serving as an input shaft connected to a steering wheel (not shown); 3, a pinion shaft; and 4, a torsion bar having one end fixed to one end of the stub shaft 2, extending toward the other end (to the left in Fig. 1) of the stub shaft 2, and connected to the pinion shaft 3 at its other end (inner end). A cylindrical rotor 11 is arranged to cover the torsion bar 4 along the extending direction of the torsion bar 4. Since it is integrally formed with the stub shaft 2, the rotor 11 is integrally connected to the stub shaft 2. A sleeve 12 is arranged around the rotor 11. The sleeve 12 has one end integrally formed with the pinion shaft 3 so that it is integrally connected to the pinion shaft 3. A rotary type channel selector valve 10 is formed between the rotor 11 and the sleeve 12. Pinion teeth 3a that mesh 'with rack teeth 5a on a rack 5 constituting a steering link mechanism (not shown) are formed on the pinion shaft 3.

Between the outer circumferential end of the rotor 11 away from the stub shaft 2 and the inner wall of the sleeve 12 near a portion integrally connected to the pinion shaft 3, a safety spline portion 6 constituted by projecting portions and groove portions is arranged as a fail safe mechanism that allows relative rotational displacement within a predetermined angular range caused by the torsion of the torsion bar 4.

The torsion bar 4 has the inner end pressed into and fixed with the pinion shaft 3 and an outer end extending through the stub shaft 2 to the outer end (right end) of the stub shaft 2. The stub shaft 2 is integrally connected to the torsion bar 4 at its serrated portion 2a to be coupled to the stub shaft 2 on the steering wheel side, through a welding means by, e.g., welding the entire circumferential portion of the serrated portion 2a to the torsion bar 4. Conventionally, this portion is connected by driving a connection pin. In contrast to this, when connection is performed by welding the entire circumferential portion of the serrated portion 2a in this manner, hole formation and pin driving.become unnecessary, and moreover an O-ring serving as a seal member also becomes unnecessary.

Reference numeral 7 denotes a steering body constituting the power steering main body portion. The steering body 7 is constituted by an integral structure serving also as a valve housing for the rotary type channel selector valve 10 (to be described later).

The stub shaft and the pinion shaft 3 are rotatably supported by radial support portions where they are directly received by bearings (to be described later) and the steering body 7. Oil seals are interposed at appropriate positions of the stub shaft 2 and the pinion shaft 3.

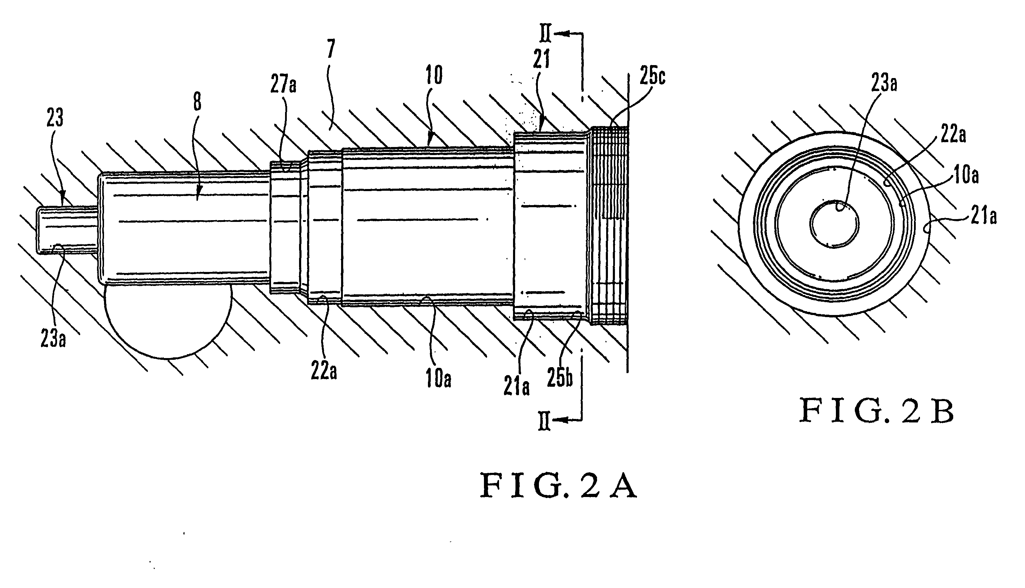

As shown in Figs. 2A and 2B, a space 8 for incorporating the stub shaft 2, the torsion bar 4, and the pinion shaft 3 is formed in the steering body 7 so as to reduce the inner diameter stepwise from one end to the other end on the stub shift 2 side.

An assembly constituted by the stub shift 2 having the rotor 11, the torsion bar 4, and the pinion bar 3 having the sleeve 12 is incorporated in the stepped hole 8. The three portions of the pinion shaft 3 are radially supported by a ball bearing 21, a bush 22, and the radial support portion for directly supporting the pinion shaft on the body 7, respectively. Therefore, the overall assembly can be pivotally supported.

Reference numeral 23a denotes a hole portion constituting an radial support portion 23 for radially supporting the distal end portion of the pinion shaft 3; 27a, a hole portion for holding an oil seal 27 (to be described later); 22a, a hole portion for radially supporting the bush 22; 10a, a hole portion for holding the sleeve 12 of the rotary type channel selector valve 10; 21a, a hole portion for holding the ball bearing 21; 25b, a hole portion for a plug member 25 (to be described later); and 25c, a screw portion for the plug member'25. The screw portion 25c is formed as the stepped hole 8, so that the inner diameter gradually increases from the hole portion 23a.

According to the present invention, in particular, the stepped hole 8 serving as the incorporating space is formed from one side of the steering body 7. The hole portions having different diameters can be formed to maintain perfect concentricity with high precision. In addition, working is also simple. The constituent components are incorporated in the assembled state in the stepped hole 8 open in one direction. Therefore, the assembly can be facilitated. In the assembled state, good-concentricity of the respective components can be maintained.

In an incorporating space 8 in the steering body 7, the rotor 11 connected to the stub shaft 2 and constituting the rotary type channel selector valve 10, and the sleeve 12 integrally connected to one end of the pinion shaft 3 are arranged on the same axis so as to oppose each other. Channel selection between an oil pump P or an oil tank T (neither are shown) and left and right cylinder chambers CL and CR of the power cylinder is performed by relative rotational displacement (torsion of the torsion bar 4) of the rotor 11 and the sleeve 12, as is known widely. In order to perform this channel selecting operation, a plurality of channel grooves are formed at predetermined intervals in the radial direction as valve grooves in the outer and inner circumferential surfaces, respectively, of the rotor 11 and the sleeve 12 that oppose and are in slidable contact with each other. A plurality of fluid supply holes and fluid discharge holes are formed in appropriate portions of the outer and inner circumferential surfaces, respectively, of the rotor 11 and the sleeve 12 by boring. When these channel grooves and the like are selectively connected and disconnected, the hydraulic circuit is selectively controlled as required.

In Fig. 1, reference numeral 15 denotes an inlet port through which the hydraulic oil flows from the oil pump P; 16, a return port 16 through which the hydraulic oil returns to the oil tank T; and 17A and 17B, left and right output ports connected to the left and right cylinder chambers CL and CR, respectively, of the power cylinder. When the rotary type channel selector valve 10 (described above) rotationally displaces upon the steering operation, the hydraulic channels among these ports are arbitrarily connected and disconnected, thereby controlling generation of an auxiliary steering force in the power cylinder (not shown), as is known widely.

According to the present invention, the sleeve 12 constituting the rotary type channel selector valve 10 is integrally formed on the pinion shaft 3. The pinion shaft 3 is radially supported by the steering body 7 at the two end portions of the sleeve 12 connected to the pinion shaft 3 through a ball bearing (rolling bearing) 21 and a bush 22.

According to the present invention, a small-diameter distal end portion 3b of the pinion shaft 3 is radially supported by an radial support portion 23 which is a recess formed in the steering body 7. The bearing gap between the radial support portion 23 and the pinion shaft 3 is within the allowable bending stress of the pinion shaft 3 and slightly larger than the bearing gap between the pinion shaft 3 and the radial support portions constituted by the ball bearing 21 and the bush 22 at the two end portions of the sleeve 12.

The ball bearing 21 described above is integral with the pinion shaft 3, has an inner ring constituted by a small-diameter cylindrical portion 12a formed at the end portion of the sleeve 12 away from the pinion shaft 3, and an outer ring 21b is fitted on the inner ring while interposing balls 21c therebetween. In Fig. 1, the plug member 25 serving as a set member is incorporated in the steering body 7 to engage with and fixed to the open end (on the stub shaft 2 side) of the incorporating space 8. The inner end of the plug member 25 abuts against the outer ring 21b of the ball bearing 21, so that it is locked between the ball bearing 21 and the stepped portion of the steering body 7 which is formed by the hole portion 21a.

The plug member 25 is formed with an opening that holds the rotor 11 integral with the stub shaft 2 while the rotor 11 extends through the opening. A holding groove 25a for holding an oil seal 26 is formed in this opening portion. The rotor 11 integrally formed - with the stub shaft 2 is pivotally inserted into the steering body 7 through the oil seal 26, and is sealed by the oil seal 26. Another oil seal 27 is disposed also at a portion of the sleeve 12 integrally formed on the pinion shaft 3 nearer the pinion teeth 3a than the bush 22. A working fluid is filled between the oil seals 26 and 27. Since the bush 22 for supporting one end of the rotor 11 is arranged in this working fluid, it has excellent bearing performance and excellent durability.

The diameter of the hole portion 22a for holding the bush 22 is slightly smaller than that of the hole portion 10a for holding the sleeve 12 of the selector valve 10 due to the following reason. In incorporating the assembly, the inner surface of the hole portion 10a which pivotally holds the sleeve 12 constituting the selector valve 10 can be prevented from being damaged by the bush 22. If such a problem is not posed, the diameters of the hole portions 22a and 10a may be equal to each other.

With the arrangement described above, since the pinion shaft 3 is radially supported by the steering body 7 through the radial support portions (21, 22) at the two end portions of the sleeve 12 which pose the serious problem in the valve action, deformation of the sleeve 12 at these portions is small and the valve action is smooth, thereby obtaining a smooth steering feeling. In particular, even if a light load such as a bending force acts on the pinion shaft 3, no bending deformation occurs in the sleeve 12, and the valve action of the rotary type channel selector valve 10 for obtaining an auxiliary steering force can be performed smoothly.

With the arrangement described above, even if a large load acts on the pinion teeth 3a of the pinion shaft 3, an influence on the sleeve 12 can be reduced, and the valve action at the sleeve 12 can be performed smoothly regardless of whether the load acts on the pinion teeth 3a.

Since the sleeve 12 constituting the rotary type channel selector valve 10 is integrally formed on the pinion shaft 3, the number of constituent components is small, and the number of portions to be worked is small, so that working and assembly operations are facilitated and the structure becomes simple. With this arrangement, a backlash that poses a problem during operation does not occur between the pinion shaft 3 and the sleeve 12, and the rigidity becomes excellent. Furthermore, in the conventional general apparatus structure, the sleeve 12 and the pinion shaft 3 are formed as separate members. When the sleeve 12 and the pinion shaft 3 are connected to each other through a connecting portion, the size of the sleeve 12 and the pinion shaft 3 as a whole increases in the radial direction due to the presence of the connecting portion. Since the valve housing portion is formed separately from the steering body 7, the number of components increases, and the working and assembly operations become cumbersome. However, with the arrangement described above, these problems do not occur.

In particular, since the stepped hole 8 serving as the incorporating space in the steering body 7 where the pinion shaft 3 and the stub shaft 2 are incorporated can be formed to open only on the stub shaft 2'side and such that its diameter decreases stepwise toward its distal end, its inner diameter can be worked by one-directional boring. Also, the assembly operation can be performed easily by incorporating, mounting, and pressing the pinion shaft 3 and the stub shaft 2 from one direction. Therefore, automatic assembly is possible.

In this embodiment, since the sleeve 12 is integrally formed on the pinion shaft 3 and the sleeve 12 is formed to have the same diameter as that of the large-diameter portion of the pinion shaft 3, the steering body 7 and the valve body can be integrally formed, and a reduction in size can be achieved. With this straight structure constituted by the pinion shaft 3 and the sleeve 12, the rotor 11 to be incorporated in this straight structure can be formed straight to have the same diameter as that of the stub shaft 2, thereby improving the workability of the stub shaft 2. As described above, since the distal end portion 3b of the pinion shaft 3 is radially supported by the radial support portion 23 having a bearing gap slightly larger than that of the radial support portions (21, 22) described above, a large support strength can be maintained over the entire pinion shaft 3, and no problem occurs in the durability.

In particular, in this arrangement, the pinion shaft 3 integrally formed with the sleeve 12 is supported at three apparent points, i.e., the two radial support portions (21, 22) at the two ends of the sleeve 12 and the radial support portion 23 of the distal end portion 3b of the pinion shaft 3. In practice, however, when, for example, the acting load is small, the pinion shaft 3 is supported at two points, i.e., at the two ends of the sleeve 12. Therefore, the valve action in travel particularly along an almost straight road can be performed smoothly.

Since the bearing gap of the radial support portion 23 at the distal end portion 3b of the pinion shaft 3 is large and the degree of freedom in elasticity at the pinion teeth 3a is large, when the pinion teeth 3a mesh with the rack teeth 5a, even if the gear working precision is poor, this poor working precision can be absorbed. Since the rack teeth 5a and the pinion teeth 3a can mesh smoothly, a smooth steering feeling can be obtained. Since the meshing gap occurring due to the gear precision is riot backlash among the constituent components, knocking does not occur in steering and kicking back.

Since the radial support portion 23 at the distal end portion 3b of the pinion shaft 3 functions only when a large load acts, which does not much influence the steering feeling, even if the pinion shaft 3 is received not by a comparatively expensive needle bearing but directly by a bush or the steering body 7, the steering feeling does not suffer.

In this embodiment described above, since the incorporating space 8 is formed by boring the steering body 7 from one side, the concentricity of the members incorporated in it can be maintained, and these members can be assembled easily. Furthermore, in this embodiment, the rotor 11 is radially supported on the inner circumferential portion of the sleeve 12 of the pinion shaft 3 to be integral with the stub shaft 2 through direct radial support of the steering body 7. While the concentricity of the rotor 11 and the sleeve 12 is maintained by this direct radial support, the rotor 11 and the sleeve 12 can be pivotally supported by the steering body 7.

In this case, at least one (particularly, the inner circumferential surface of the sleeve 12) of the outer and inner circumferential slidable contact surfaces of the rotor 11 and. the sleeve 12 may be subjected to friction decreasing treatment. As such friction decreasing treatment, for example, low-temperature sulfuric acid treatment, manganese phosphate treatment, gas soft nitriding treatment, Teflon dispersion type electroless nickel-phosphorus composite plating, molybdenum disulfide baking, Teflon coating, and plasma-CVD ceramic-based hard film treatment are possible, and either one of them may be performed.

Among the friction decreasing treatments, the low-temperature sulfuric acid treatment is surface heat treatment for film formation capable of forming an FeS film thinner than that in a chemical reaction in a solution. This method is advantageous in that dimensional precision and shape precision can be easily improved, and the surface-precision level of the starting material can be maintained.

In particular, such rotor 11 and sleeve 12 pivot relative to each other only through a small angle. If the rotor 11 or the sleeve 12 is subjected to the surface treatment as described above, the apparatus becomes advantageous in terms of cost when compared to a case wherein a separate bearing is arranged.

This embodiment further improves an assembly structure of a ball bearing 21 in which a small-diameter cylindrical portion 12a formed at the end portion of a sleeve 12 of a pinion shaft 3 on the stub shaft 2 side serves as the inner ring.

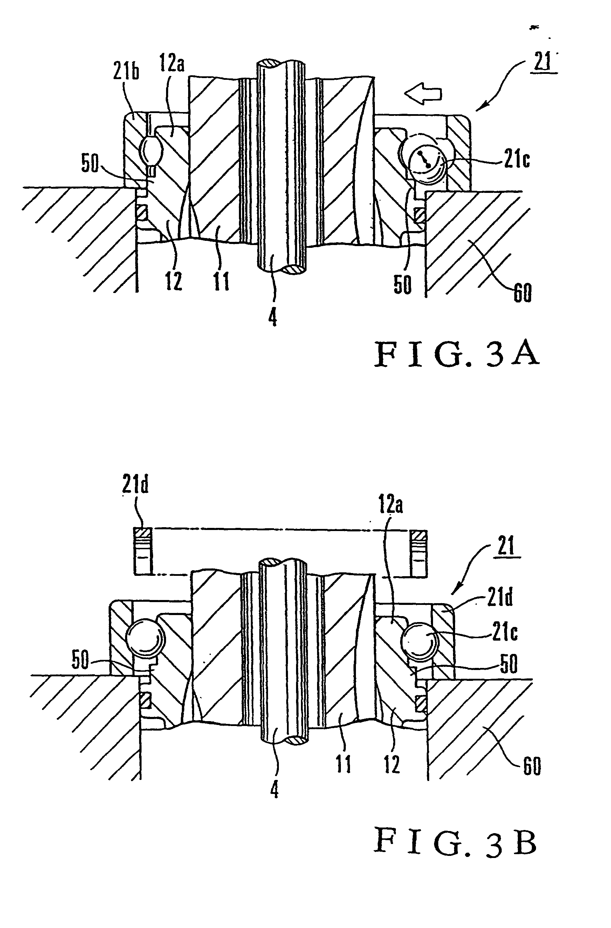

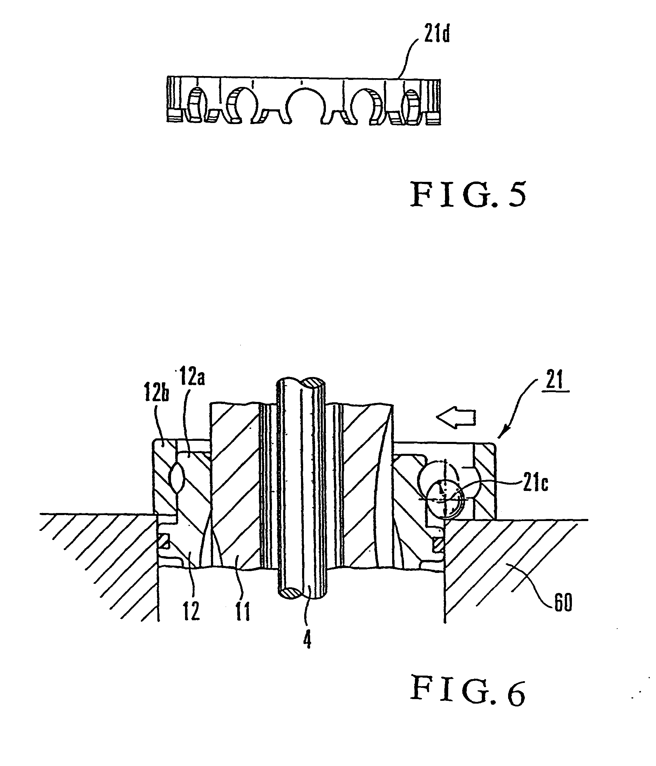

More specifically, a relatively large-diameter annular stepped portion 50 serving as a ball shift preventing means in assembly is formed at the distal end portion (i.e., a portion close to the end portion) of the small-diameter cylindrical portion 12a on a side close to the sleeve 12. The extension lenth of the annular stepped portion 50 toward the distal end portion is determined in consideration of the workablility in assembling the ball bearing 21, as shown in Figs. 3A and 3B and Fig. 6. More specifically, the ball bearing 21 uses a jib 60 for holding the sleeve 12, which has received the stub shaft 2 (rotor 11) and the torsion bar 4, with the small-diameter cylindrical portion 12a facing upward. An outer ring 21b is inserted using the small-diameter cylindrical portion 12a serving as the inner ring as the center and is located to be decentered in the planar direction. In this state, as shown in Figs. 3A, 6, and 4A, a plurality (12 balls in this case) of balls 21c are sequentially inserted in the crescent space formed between the inner ring 12a and the outer ring 21b.

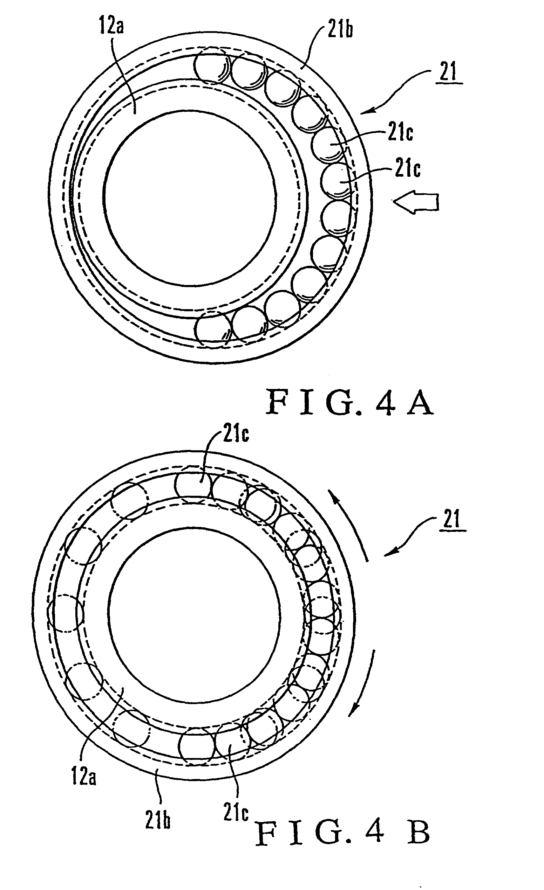

As indicated by arrows, the outer ring 21b is moved from the decentered state toward the planar direction to a position where the outer ring 21b has the center as the center of the inner ring. At this time, the balls 21b are fitted in the annular recess formed between the outer circumferential surface of the inner ring and the inner circumfernetial surface of the outer ring and are set in a state indicated by the solid line in Fig. 4B. After the balls 21c are properly located in the circumferential direction, a case member 21d shown in Figs. 3B and 5 is fitted on the outer ring to prevent circumferential movement of the balls 21c, thereby completing the assembly of the ball bearing 21.

In the assembly of the ball bearing 21, when the stepped portion 50 described above is absent, the center of the sphere as the ball 21c is located lower than the edge portion of the annular recess, and the ball may be supported on the surface of the jib 60. In this state, some tool must be inserted from the jig surface side to float the balls 21c and locate the center of sphere as the ball 21c above the edge portion. That is, without this countermeasure, the outer ring 21b may not be moved in the planar direction, and the balls 21c may not be fitted at the predetermined positions.

In the embodiment, as shown in Fig. 3, the center of the sphere as the ball 21c can always be located above the edge portion of the annular recess. When the outer ring 21b is moved in the planar direction, the balls 21c can be guided to the annular recess and assembled in an optimal state. As shown in Fig. 3A, the annular stepped portion 50 described above can also serve as a stopper for preventing excessive decentering of the outer ring 21b with respect to the inner ring.

With the above structure, the small-diameter cylindrical portion 12a formed on a constituent component which is the sleeve 12 of the pinion shaft 3 serves as the inner ring, the annular recess is formed in the outer circumferential portion of the inner ring, the outer ring 21b is fitted on the outer circumferential surface of the inner ring, and balls 21c are interposed between the inner ring and the outer ring to constitute the ball bearing 21. This assembly operation can be facilitated, and its automatic assembly can be achieved.

In this embodiment, the end portion 12 a of the pinion shaft 3 (sleeve 12) on the stub shaft 2 side is formed as the small-diameter cylindrical portion, the annular recess which forms a ball holding groove is formed on the outer circumferential portion of the small-diameter cylindrical portion, and this portion serves as the inner ring of the ball bearing 21.
However, the present invention is not limited to this. Alternatively, the stepped portion 50 may be formed on the inner circumferential surface of the outer ring 21b.

The present invention is not limited to the structures described in the above embodiments, but the shape, structure, and the like of the respective portions of the power steering main body portion 1 of the rack-pinion type power steering apparatus can be modified and changed as required, as a matter of course. More specifically, in the embodiments described above, the rack-pinion power steering apparatus is entirely examined, and the structure is simplified, the workability and the assembly are facilitated, and the cost is reduced. However, the present invention is not limited to this.

For example, the structure or the support structure of the stub shaft 2 and the rotor 11 constituting the rotary type channel selector valve 10, the shape and structure of the valve grooves and the fluid pressure channels of the rotary type channel selector valve 10 constituted by the rotor 11 and the sleeve 12, the rack 5, the support structure of the rack 5, and the like may be changed as required.

The ball bearing using the sleeve 12 as the inner ring constitutes the radial support portion at the end portion of the sleeve 12 on the steering wheel side of the pinion shaft 3. However, the present invention is not limited to this, and a ball bearing whose inner ring is integrally fixed on the sleeve by a locking means, e.g., a snap ring, my be used.

The radial support portion at the axial center located on the sleeve 12 of the pinion shaft 3 on the pinion teeth 3a side is not limited to the bush 22, but may employ a bearing structure in which this axial center is directly received by a needle bearing or the steering body 7. The radial support portion 23 nearer the distal end portion 3b of the pinion shaft 3 than the pinion teeth 3a constitutes a bearing structure directly received by the body 7. However, this portion may constitute a bearing structure employing a bush or a needle bearing.

The distal end portion 3b located on the distal end side more than the pinion teeth 3a of the pinion shaft 3 my be formed with, e.g., a straight shape, a tapered shape in which the distal end is slightly so thin as to avoid striking of the distal end edge, or a curved shape in which the central portion is slightly thick.

## Claims

1. A rack-pinion type power steering apparatus comprising:
a cylindrical stub shaft (2) which is rotatably structured in a steering body (7) upon a steering operation;
a torsion bar (4) having a first end portion fixed in a shaft hole of said stub shaft (2), the torsion bar extending toward a second end portion,
a pinion shaft (3) connected to the second end portion of said torsion bar (4) and pivotally structured in a rotatable state relative to said stub shaft (2) in said steering body (7);
a rotor (11) extending to cover said torsion bar (4) from said stub shaft (2) along an extending direction of said torsion bar (4); and
a sleeve (12) having a first end portion integrally connected to said pinion shaft (3), extending from said pinion shaft (3) along said stub shaft (2), and arranged around said rotor (11) to constitute a rotary type channel selector valve between said rotor (11) and said sleeve (12), wherein
said steering body (7) has a stepped hole (8) whose inner diameter increases stepwise from a first end to a second end on the stub shaft (2) side of said steering body (7), and
said pinion shaft (3), said torsion bar (4), and said stub shaft (2) are incorporated in said stepped hole (8), a plurality of portions in said stepped hole (8) are pivotally supported, and a set member (25) is fixed to an opening end of said stepped hole (8), thereby obtaining an integrally assembled structure, and
said pinion shaft (3) connected to said stub shaft (2) through said torsion bar (4) is pivotally supported in said stepped hole (8) of said steering body (7) by support portions disposed at at least two axial positions in an axial direction, and
said support portion on the stub shaft (2) side comprises a ball bearing (21),
thereby incorporating respective members constituting said apparatus in said steering body (7), wherein
said ball bearing (21) is constituted such that the end portion (12a) on the stub shaft (2) side of said sleeve (12) serves as an inner ring, and an outer ring (21b) is fitted on an outer circumferential side of said inner ring, while interposing a plurality of balls (21c) therebetween,
**characterized by** means (50) for preventing a shift in said balls (21c) during assembly of said ball bearing (21) which are formed at a portion near said end portion (12a) on the stub shaft (2) side of said sleeve (12).

2. A apparatus according to claim 1, wherein said pinion shaft (3) is radially supported by said steering body (7) at the two end portions of said sleeve (12).

## Patentansprüche

1. Zahnstangen-Servolenkvorrichtung, die folgendes umfaßt:
eine zylindrische Flanschwelle (2), die so ausgeführt ist, daß sie sich bei einem Lenkvorgang in einem Lenkkörper (7) drehen kann;
einen Torsionsstab (4) mit einem in einem Wellenloch der Flanschwelle (2) befestigten ersten Endteil, wobei sich der Torsionsstab zu einem zweiten Endteil hin erstreckt;
eine mit dem zweiten Endteil des Torsionsstabs (4) verbundene Ritzelwelle (3), die in einem drehbaren Zustand bezüglich der Flanschwelle (2) im Lenkkörper (7) drehbar ausgeführt ist;
einen Rotor (11), der sich so erstreckt, daß er den Torsionsstab (4) von der Flanschwelle (2) entlang einer Erstreckungsrichtung des Torsionsstabs (4) abdeckt; und
eine Hülse (12) mit einem mit der Ritzelwelle (3) integral verbundenen ersten Endteil, die sich von der Ritzelwelle (3) entlang der Flanschwelle (2) erstreckt und um den Rotor (11) herum angeordnet ist und somit ein Drehkanalwählventil zwischen dem Rotor (11) und der Hülse (12) bildet, wobei
der Lenkkörper (7) eine abgestufte Bohrung (8), dessen Innendurchmesser sich von einem ersten Ende zu einem zweiten Ende auf der Seite der Flanschwelle (2) des Lenkkörpers (7) schrittweise vergrößert, aufweist, und
die Ritzelwelle (3), der Torsionsstab (4) und die Flanschwelle (2) in der abgestuften Bohrung (8) enthalten sind, mehrere Teile in der abgestuften Bohrung (8) drehbar gestützt werden und ein Klemmglied (25) an einem Öffnungsende der abgestuften Bohrung (8) befestigt ist, wodurch eine integral zusammengebaute Konstruktion erhalten wird, und
die über den Torsionsstab (4) mit der Flanschwelle (2) verbundene Ritzelwelle (3) in der abgestuften Bohrung (8) des Lenkkörpers durch an mindestens zwei axialen Positionen in einer axialen Richtung angeordnete Stützteile in der abgestuften Bohrung (8) des Lenkkörpers (7) drehbar gestützt wird, und
der Stützteil auf der Seite der Flanschwelle (2) ein Kugellager (21) umfaßt,
wodurch jeweilige die Vorrichtung bildende Glieder im Lenkkörper (7) aufgenommen werden, wobei
das Kugellager (21) so gebildet ist, daß der Endteil (12a) auf der Seite der Flanschwelle (2) der Hülse (12) als Innenring dient und ein Außenring (21b) auf einer Außenumfangsseite des Innenrings angebracht ist, während mehrere Kugeln (21c) dazwischen angeordnet sind,
**gekennzeichnet durch** Mittel (50) zur Verhinderung einer Verschiebung der Kugeln (21c) bei der Montage des Kugellagers (21), die an einem Teil nahe dem Endteil (12a) auf der Seite der Flanschwelle (2) der Hülse (12) gebildet sind.

2. Vorrichtung nach Anspruch 1, bei der die Ritzelwelle (3) an den beiden Endteilen der Hülse (12) durch den Lenkkörper (7) radial gestützt wird.

## Revendications

1. Appareil de direction assistée à crémaillère, comprenant :
un arbre à bout cylindrique (2) monté à rotation dans un corps de direction (7) au cours d'une opération de direction ;
une barre de torsion (4) ayant une première portion d'extrémité fixée dans un trou d'arbre dudit arbre à bout (2), la barre de torsion s'étendant vers une deuxième portion d'extrémité ;
un arbre de pignon (3) fixé à la deuxième portion d'extrémité de ladite barre de torsion (4) et monté à pivotement dans un état rotatif par rapport audit arbre à bout (2) dans ledit corps de direction (7) ;
un rotor (11) s'étndant pour couvrir ladite barre de torsion (4) depuis ledit arbre à bout (2) suivant une direction longitudinale de ladite barre de torsion (4) ; et
un manchon (12) ayant une première portion d'extrémité connectée intégralement audit arbre de pignon (3), s'étendant depuis ledit arbre de pignon (3) le long dudit arbre à bout (2) et arrangé autour dudit rotor (11) afin de constituer une soupape de sélecteur à canal de type rotative entre ledit rotor (11) et ledit manchon (12),
ledit corps de direction (7) comprenant un trou étagé (8) dont le diamètre intérieur augmente par échelons d'une première extrémité à une deuxième extrémité sur le côté arbre à bout (2) dudit corps de direction (7), et
ledit arbre de pignon (3), ladite barre de torsion (4), et ledit arbre à bout (2) étant incorporés dans ledit trou étagé (8), une pluralité de portions dans ledit trou étagé (8) étant supportées à pivotement, et un organe fixe (25) étant fixé au niveau d'une extrémité d'ouverture dudit trou étagé (8), pour ainsi obtenir une structure assemblée intégralement, et ledit arbre de pignon (3) connecté audit arbre à bout (2) par le biais de ladite barre de torsion (4) étant supporté à pivotement dans ledit trou étagé (8) dudit corps de direction (7) par des portions de support disposées en au moins deux positions axiales dans une direction axiale, et
ladite portion de support du côté arbre à bout (2) comprenant un roulement à billes (21),
pour incorporer ainsi des organes respectifs constituant ledit appareil dans ledit corps de direction (7),
ledit roulement à billes (21) étant constitué de telle sorte que la portion d'extrémité (12a) du côté arbre à bout (2) dudit manchon (12) serve de bague interne, et une bague externe (21b) étant ajustée sur un côté circonférentiel externe de ladite bague interne, tout en interposant une pluralité de billes (21c) entre elles,
**caractérisé par** des moyens (50) pour empêcher un déplacement desdites billes (21c) lors de l'assemblage dudit roulement à billes (21), lesquels sont formés au niveau d'une portion proche de ladite portion d'extrémité (12a) sur le côté arbre à bout (2) dudit manchon (12).

2. Appareil selon la revendication 1, dans lequel ledit arbre de pignon (3) est supporté radialement par ledit corps de direction (7) au niveau des deux portions d'extrémité dudit manchon (12).
